Europäisches Patentamt

European Patent Office

Office européen des brevets

(19)

(11) Publication number: **0 059 585**
**B1**

(12)

# EUROPEAN PATENT SPECIFICATION

(45) Date of publication of patent specification: 05.04.89

(51) Int. Cl.⁴: **G 01 P 3/489, G 01 P 3/56**

(21) Application number: **82300906.3**

(22) Date of filing: **23.02.82**

(54) Timing angle and speed measurement of shafts.

(30) Priority: **03.03.81 PCt/us81/00268**

(43) Date of publication of application:
**08.09.82 Bulletin 82/36**

(45) Publication of the grant of the patent:
**05.04.89 Bulletin 89/14**

(84) Designated Contracting States:
**BE DE FR GB**

(56) References cited:
**DE-A-2 210 400**
**DE-A-2 403 886**
**DE-A-2 418 328**
**FR-A-2 296 850**
**GB-A-1 439 553**
**US-A-3 184 668**
**US-A-4 179 922**

(73) Proprietor: **CATERPILLAR INC.**
**100 Northeast Adams Street**
**Peoria Illinois 61629-6490 (US)**

(72) Inventor: **Stevenson, Thomas T.**
**2256 W. Warwick Drive**
**Peoria Illinois 61615 (US)**
Inventor: **Zenios, Marios C.**
**2504 W. Pintura Court**
**Peoria Illinois 61615 (US)**

(74) Representative: **Brunner, Michael John et al**
**GILL JENNINGS & EVERY 53-64 Chancery Lane**
**London WC2A 1HN (GB)**

Courier Press, Leamington Spa, England.

## Description

This invention relates to apparatus for determining the actual speed of a rotating shaft and the relative angular relationship between that shaft and a further shaft driving or driven by it. The invention has particular application in the field of internal combustion engines.

Basic control of the operation of an internal combustion engine is accomplished by varying the amount of fuel delivered to the engine cylinder by the fuel pump and by controlling the time that the fuel in the cylinder ignites as the pistons approach top dead centre on the compression stroke. In general, the amount of fuel delivered to the cylinders will control the speed of the engine while the timing of ignition will control the efficiency of fuel combustion.

In a typical four-stroke-cycle diesel engine a timing shaft is gear driven by the engine crankshaft at half engine speed, with the timing shaft being coupled to the drive shaft of a fuel pump by a timing mechanism so that the fuel pump will deliver fuel to half of the engine cylinders during one engine revolution and to the other half of the cylinders during the next revolution. A controllable fuel rack will vary the amount of fuel that the fuel pump delivers to the engine cylinders and a timing mechanism can be used to vary the angular relation between the timing shaft and the fuel pump drive shaft so that fuel is injected into the cylinders at the proper time in engine operation relative to the pistons reaching top dead centre on their compression strokes.

In order to provide an electronic engine control system which will function to maintain engine performance at maximum efficiency under varying operating conditions, it is necessary to obtain precise information as to the actual engine speed and the magnitude of the timing advance angle.

Furthermore, for an engine control system to be effective, the system must have a rapid response time, with speed and timing advance angle information being updated many successive times during a single revolution of the engine.

There are a number of problems involved in providing suitable apparatus for obtaining the desired engine speed and timing advance information.

First, the apparatus should have a life which meets or exceeds engine overhaul time to prevent premature failutre and loss of control. To meet this requirement, the components utilized for detection of speed and angular displacement of the fuel camshaft need to be simple, rugged and non-contacting.

The presence of engine torsionals presents a significant problem in providing accurate information as to engine speed and timing advance angle. Briefly the problem is that internal combustion engines have inherent imbalances causing the instantaneous speed of the engine to vary sinusoidally during a sequential operation of the pistons, with the engine being accelerated during operation of one half of the pistons and decelerated during the successive operation of the other half of the pistons. If the engine is operating at a given average speed, and if the instantaneous engine speed is determined once for, and at the same time during, each full cycle of sinusoidal operation, each successive instantaneous speed determination will be the same as before. Likewise, if the average engine speed should vary, the instantaneous speed determination will vary directly therewith.

However, if a speed determination is made more frequently than once during a full cycle of sinusoidal operation, as is desired in the present invention, the successive instantaneous speed determinations will vary from one another even though the average engine speed remains the same. Thus, in order to obtain useful speed information many times successively during a full sinusoidal cycle of engine operation, the effect of the engine torsionals must be cancelled out so that each successive bit of information will have the same relationship to the average engine speed.

Measurements of the timing advance angle have been made by a first sensor operable to detect movement of a fixed point on the timing shaft and a second sensor operable to detect movement of a fixed point on the fuel pump drive shaft, and by means to measure the time between actuation of the two sensors. The time lapse is related to the phase angle between the shafts produced by the timing mechanism and can thus be used to provide information as to the magnitude of the timing advance angle. However, such systems as have been devised heretofore require careful initial mechanical adjustment of the sensor systems in order to provide accurate timing advance angle information. Accordingly it is desirable to provide a similar sensor system for timing advance angle determination which does not require such initial adjustment.

Speed and timing advance angle determination systems which provide analog information are inherently inaccurate, since age and varying temperature conditions will often cause component values to change. Thus it is desirable for the system to operate on digital information.

GB—A—1439553 from which the preamble of present Claim 1 has been derived discloses an apparatus and method for measuring the relative phase shift between two pulse trains of the same variable frequency 1/T, wherein counting the number of pulses occurring during a certain time interval in one of the pulse trains takes place, and wherein the time t between a pulse in one train and a subsequently occurring pulse in the second train is registered by pulses of known frequency proportional in number to this time. The relative phase shift is t/T. US—A—4179922 discloses apparatus wherein a succession of electrical pulses are provided, corresponding to successive crankshaft positions, circuitry being provided for responding to the pulses for the purpose of measuring the time interval between successive pulses.

According to the invention there is provided a system having first and second rotatable shafts and timing means rotatably linking one of the shafts to the other and for varying, within a predetermined range the angular relationship between the shafts, comprises:

a first circular member rotating in use about its centre at a speed proportional to the speed of the first shaft and providing a plurality of equiangularly spaced first members movable through a first circular path;

a first signal generating means for generating a first signal in response to movement of each first member past a predetermined point in the first circular path;

a second circular member rotating about its centre at a speed proportional to the speed of the second shaft and providing a plurality of equiangularly spaced second members, movable through a second circular path;

a second signal generating means for generating a second signal in response to movement of each second member past a predetermined point in the second circular path;

clock means for generating a series of fixed frequency clock pulses;

counting means for:

a) obtaining a first count of the number of clock pulses occurring in the time interval beginning and ending with consecutive signals from one of the signal generators; and

b) obtaining a second count of the number of clock pulses occurring in the time interval beginning with a signal from one of the signal generators and ending with a successive signal from the other of the signal generators;

and angle-indicating means for generating an angle-indication signal proportional to the ratio of the first and second counts of the counting means to provide an indication of the relative timing between the shafts; characterised in that:

the number of first and second members is such that N number of each of the first and second signals are generated during one full revolution of one of the first and second shafts, N being an integer, the counting means is arranged to obtain N/M number of successive first and second counts during one full revolution, M being an integer, and the angle-indicating means generates N/M number of successive angle-indicating signals during one full revolution, and characterised by angle-averaging means for generating an average-angle signal equal to the sum of NP/M number of successive angle-indicating signals divided by the number NP/M, wherein P is an integer representing a predetermined number of successive full revolutions.

The sinusoidal torsional effects may be averaged out by obtaining many successive angle-indicating and/or speed-indicating signals during a full revolution of the shafts, and each time new signals are obtained, a predetermined number of successive signals are added together and divided by the predetermined number.

The first count may be obtained by counting the number of clock pulses occurring between the signal from one of the signal generators and the next signal from the other of the signal generators, by counting the number of clock pulses occurring between the next signal from the other of the signal generators and the next signal from the one of the signal generators, and by adding these two numbers of clock pulses together.

An initial angle-indicating signal may be obtained corresponding to a minimum advance angle and may be compared to subsequently obtained angle-indicating signals to derive a signal corresponding to the actual angle advance from minimum advance.

In the drawings, forming a part of this application and in which like parts are designated by like reference numerals throughout the same,

Fig. 1 is a generally schematic illustration of an engine and fuel pump system utilising the present invention;

Fig. 2 is a graph illustrating the effect of engine torsionals;

Fig. 3 is a graph illustrating the torsional cancellation technique of the present invention;

Fig. 4 is a block diagram of one form of the data processing of Fig. 1;

Fig. 5 is a timing chart of the signals produced by the sensor and fuel camshaft sensor and used in the data processor of Fig. 4;

Fig. 6 is a modification of a portion of the data processor of Fig. 4;

Fig. 7 is a block diagram of an alternative form of the data processor of Fig. 1; and

Fig. 8 is a timing chart of the signals produced by the sensor and fuel camshaft sensor and used in the data processor of Fig. 7.

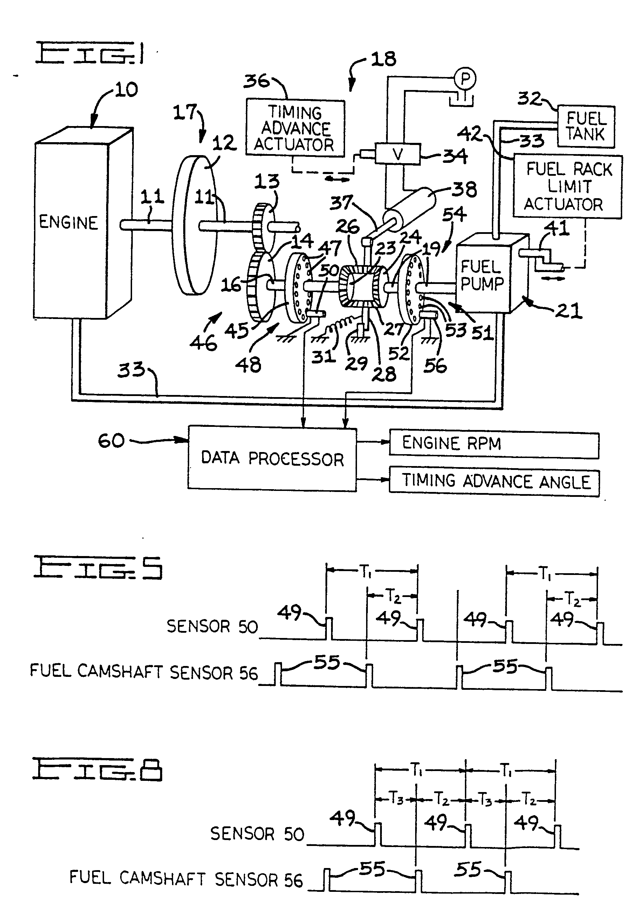

Referring now to the drawings wherein preferred embodiments of the invention are shown, Fig. 1 illustrates schematically an internal combustion engine 10, such as a four-stroke-cycle diesel engine, the engine having a crank shaft 11 to which circular flywheel member 12 is fixed for rotation at a speed equal to the engine speed. Meshed gears 13 and 14, on crank shaft 11 and timing shaft 16 respectively, are provided to transmit engine rotation to the timing shaft 16. As is seen, engine 10, crank shaft 11 and gears 13 and 14 constitute a drive means 17 for driving a timing shaft 16 at a rotational speed directly proportional to the engine speed, the contant of proportionality being dependent on the gear ratio of gears 13 and 14. For a four-stroke-cycle diesel engine the gear ratio is such that the timing shaft 16 is driven at half the speed of the engine.

A timing means 18 is provided to rotatively drive fuel camshaft 19 of fuel pump 21 by timing shaft 16 and to vary, within a predetermined range, the angular relationship between the timing shaft 16 and fuel camshaft 19. As illustrated in Fig. 1, timing means 18 may comprise gears 23 and 24 fixed to timing shaft 16 and fuel camshaft 19, respectively, with the drive of gear 23 being transmitted to gear 24 by gears 26 and 27 which are each meshed with both gears 23 and 24 and are rotatable on spindle 28. Spindle 28 is biased towards a zero reference fixed stop 29 by spring 31. The system is initially bench set so that when the spindle 28 is against the stop 29, the fuel camshaft 19 will cause the fuel pump 21 to deliver fuel from fuel tank 32 and fuel line 33 to the engine 10 at a minimum advance (typically 14°) before top dead center of the engine pistons. Of course, other types of differential type units could also be employed to control this angular relationship.

The timing means 18 will cause the timing advance angle of fuel delivery to be set at a desired value greater than minimum during operation of the engine 10 as by actuation of valve 34 in response to timing advance actuator 36, so that piston 37 of hydraulic cylinder 38 will extend or retract and cause gear spindle 28 to move to a desired position away from stop 29. At such desired position, gears 26 and 27 will cause fuel camshaft 19 to be drive at the same speed as that of timing shaft 16, but the angular relationship of the two shafts will have been increased from the minimum advance relationship.

Fuel pump 21 has a movable fuel rack 41, controlled by fuel rack actuator 42, to control the amount of fuel flow through the fuel pump.

A first rotation responsive means 46 is provided for generating a signal each successive time that engine 10 rotates through 360/N degrees, N being an integer. As illustrated here, the rotation responsive means 46 includes a plurality of holes 47 in a disc 45, equi-angularly spaced relative to, and equi-distally spaced from the axis of the flywheel. This disc 45 is axled on the timing shaft 16 at a position between gear 14 and gear 23. Holes 47 in disc 45 thus provide irregularities on the ferromagnetic disc which constitute magnetically-sensible members which rotate in a circular path around timing shaft 16. Similarly, disc 45 could be a gear, the teeth of which serve as magnetically-sensible members.

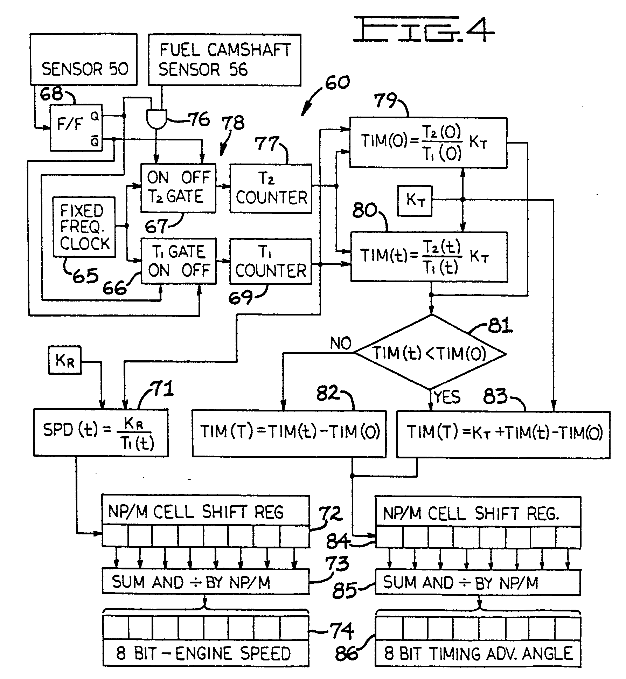

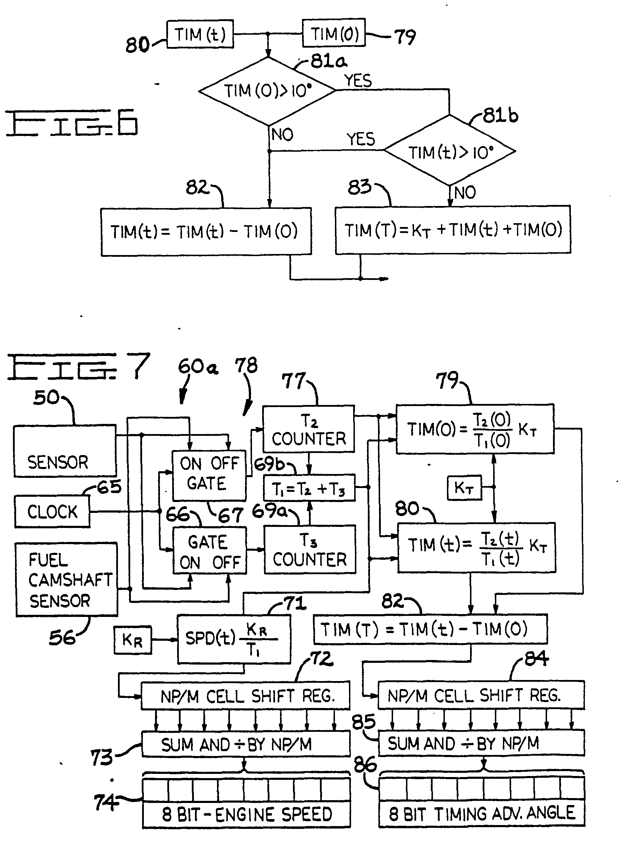

Rotation responsive means 46 also includes a first signal generating means 48 for generating a first signal 49 (Fig. 5) in response to each movement of a hole 47 past a predetermined point in the circular path of movement of holes 47. In particular the signal generating means 48 includes a fixed magnetic sensor 50 located adjacent the circular path of movement, the location of the sensor 50 thus determining the predetermined point in the path of movement of holes 47.

As illustrated, disc 45 has 24 holes 47, thus a first signal 49 will be generated each time the timing shaft 16 rotates through 360/24, or 15 degrees. Since timing shaft 16 is driven at half engine speed, a first signal will be generated each time the engine rotates through 30 degrees.

A second rotation responsive means 51 is provided for generating a second signal each successive time that the engine has rotated through 360/N degrees. As illustrated here, the rotation responsive means 51 includes a circular, ferromagnetic disk member 52 fixed to fuel camshaft 19 for rotation therewith, circular member 52 having a plurality of holes 53 equiangularly spaced around member 24 and equidistant from the axis of camshaft 19. As before, holes 53 provide magnetically-sensible, surface irregularity members which move in a circular path around camshaft 19.

Rotation responsive means 51 also includes a second signal generating means 54 for generating a second signal 55 (Fig. 5) in response to each movement of a hole 53 past a predetermined point in the circular path of movement of holes 53. As illustrated, the signal generating means 54 includes a fixed magnetic sensor 56 located adjacent the circular path of movement of holes 53. Again, the fixed location of the sensor 56 determines the predetermined point in the path of movement of holes 53.

As illustrated, the circular member 53 has twenty-four holes 53, and thus a second signal 55 will be generated for each 15 degrees of rotation of camshaft 19. Or, since fuel camshaft 19 is driven at half engine speed, a second signal will be generated for each 30 degrees of rotation of engine 10.

With the illustrated system, the number of first signals 49 from the flywheel sensor 50 will be equal to the number of second signals 55 from the fuel camshaft sensor 56 during any given length of time, such as the time that it takes the engine crank shaft 11, or the time that it takes either of the timing or fuel camshaft 16 or 19, to rotate through a full revolution, and the time interval between consecutive first signals will be equal to the time interval between consecutive second signals. The phase relationship of the first and second signals 49 and 55 will vary in accordance with the timing advance angle set by the timing means 18.

The first and second signals from the sensor 50 and fuel camshaft sensor 56 are then sent to the data processor 60 wherein the signals are used to generate digital signals proportional to the engine speed and the timing advance angle of the fuel pump 21.

In a further embodiment of the invention, the engine speed and timing advance angle signals are also generated in a manner so as to cancel out the effect of engine torsionals. As previously mentioned, piston-operated internal combustion engines have inherent imbalances which cause regularly occurring disturbances in the operation of the engine. Since one-half of the pistons drive the crank shaft during one complete engine revolution and the other, alternate one-half of the pistons drive the crank shaft during the subsequent revolution, and since these two sequences each have a discrete set of disturbances associated with them, the two revolutions will never have precisely the same characteristics. The crank shaft will always have a somewhat different amount of power transmitted to it during one full revolution than the one immediately preceding or following

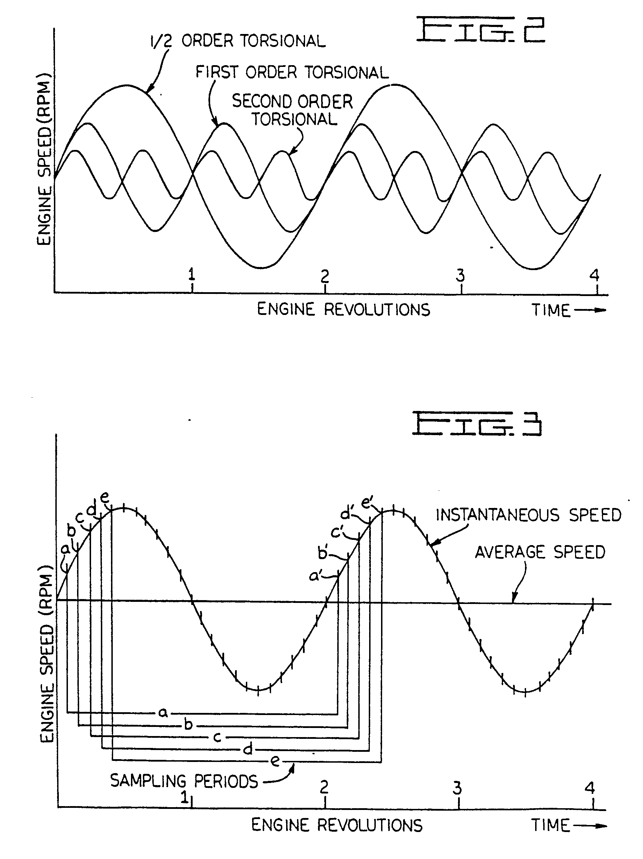

As is seen in Fig. 2, the inherent engine imbalances will produce a half order torsional having a full cycle during two full engine revolutions, a first order torsional occurring in one full engine revolution, a second order torsional occurring in one-half an engine revolution, and so on with higher order torsionals of decreasing magnitude. The result of the torsionals is that the instantaneous engine speed will vary as the engine rotates. The mass of the drive system and flywheel will damp the effect of the imbalances but the actual speed will still vary sinusoidally through two engine revolutions, with the engine alternately accelerating and decelerating.

In the present apparatus, it is desired to obtain rapidly recurring signals, for example at 6 or 12 times each engine revolution, each signal being indicative of the average speed of the engine (so that the average speed can be quickly tracked during engine operation), in spite of the fact that the instantaneous engine speed will only be the same as the average speed once each full engine revolution, and will vary from the average speed during the rest of the engine revolution.

The technique used in the present invention to cancel out the effect of engine torsionals is illustrated in Fig. 3.

The instantaneous speed of the engine is determined N/M times for each full revolution of the engine, N being an integer representing the number of times that a signal from the sensor 50 is generated during a full engine revolution, and M being either 1 or 2, depending upon whether a new, updated speed determination is made each time a sensor 50 signal is generated or whether a new, updated speed determination is made for every other sensor 50 signal. (N/M)P consecutive instantaneous speed determination are then added and divided by (N/M)P, P being an integer representing a number of full engine revolutions, to obtain an average engine speed during the P number of engine revolutions.

For example, if the speed determinations are to be averaged over two full engine revolutions (P=2) and a rotation responsive means 46 is used with 24 holes 47 in the disc 45 (N=12, since disc 45 turns at half engine speed), and a speed determination is made for each time (M=1) the sensor 50 senses the movement of a hole 47 therepast (as in Figs. 7 and 8), then 24 successive speed determinations will be averaged. As seen in Fig. 3, if the instantaneous speed determinations at the 24 sampling points in the sampling period beginning with "a" and ending with "a'" are taken, half of the instantaneous speed determination will be greater and half will be less than the average engine speed, so that when averaged, the 24 speed determinations will equal the average speed of the engine for the sampling period. The same will be true for any of the other sampling periods b-b', c-c', and so forth.

As is also apparent, if the speed averaging is done at each point a', b', c' and so on, then the average engine speed will be updated each time the engine has rotated through 360/N degrees, or 30 degrees.

If an instantaneous speed determination is made for every other hole 47 (M=2), as in Figs. 4 and 5, then twelve speed determinations will be made and averaged, e.g. at a, c, e and so on, for two full engine revolutions. The successive averagings will again each be equal to the actual average engine speed, but the average engine speed information will only be available for every 60 degrees of engine rotation.

Fig. 4 illustrates one embodiment of data processor 60 which can be used to generate average speed and average timing advance angle signals in response to generation of signals by the sensors 50 and 56. As is seen in Fig. 5, sensor 50 will generate a series of first signals 41 in response to each passage of a disc hole 47 therepast, with a time lapse of $T_1$ between consecutive leading edges of the signals. The fuel camshaft sensor 56 will likewise generate a series of second signals 55, each also having a time lapse of $T_1$, between consecutive signals. The first and second signals 49 and 55 will be out of phase with each other in an amount dependent upon the position of the timing means 18, and there will be a time lapse of $T_2$ between the leading edge of a second signal 55 and the leading edge of the next successive first signal 49. The time lapse $T_1$ is inversely proportional to engine speed: the faster the speed of engine rotation, the shorter the time of $T_1$ and vice versa. The time lapse $T_2$, for any given phase relation between the timing and fuel camshaft 16 and 19, is also inversely proportional to engine speed. The ratio of $T_2/T_1$ is proportional to the degree of phase relation between the timing and fuel camshafts 16 and 19, and will remain constant for any given degree of phase relation regardless of engine speed.

In the data processor 60 of Fig. 4, a fixed frequency clock 65 generates a continuous series of high frequency clock pulses which are applied to the inputs of $T_1$ gate 66 and the $T_2$ gate 67. The first signals 49 from the disc sensor 50 are applied to flip-flop 68 so that a high Q flip-flop output from alternate first signals 49 will cause the $T_1$ gate 66 to close and a high Q flip-flop output from the next successive first signals 49 will cause the $T_1$ gate 66 to open.

During the time the $T_1$ gate 66 is closed, clock pulses from clock 65 will pass through the gate to the $T_1$ pulse counter 69 and be counted. When the $T_1$ gate is then opened, the $T_1$ pulse counter 69 will have a count of the number of clock pulses occurring during the time interval beginning and ending with successive first signals 49. Since clock 65 has a fixed frequency, the count of $T_1$ pulse counter 69 will be inversely proportional to the speed of the engine.

After the $T_1$ gate has opened, the count $T_1(t)$ i.e. the instantaneous count for 30° of engine revolution, in the $T_1$ counter is applied to divider 71, along with a constant $K_R$, the divider 71 functioning to divide the constant $K_R$ by the count $T_1(t)$ and serving as a speed-indicating means for generating an instantaneous speed-indicating signal, SPD(t), which is inversely proportional to the count $T_1(t)$ of the counter 66 and is thus directly proportional to the instantaneous engine speed measured during the time the $T_1$ gate 66 was closed. The constant $K_R$ is chosen to scale the $T_1(t)$ count so that a useful eight-bit binary coded SPD(t) signal is obtained. This is accomplished once the data is loaded into the register.

The SPD(t) signal is then applied to the input cell of shift register 72, the shift register having NP/M number of cells. In the embodiment presently described, shift register 72 would have 12 cells. As the engine continues to rotate, the successively generated speed-indicating signals SPD(t) will be applied to shift register 72 so that the shift register will have, at any time, the 12 most recent successive speed-indicating signals therein.

Each time a new SPD(t) signal has been entered into shift register 72, the signals in all of the shift register cells are applied to the speed averaging means 73, shown here as an adder-divider, which adds the NP/M number of speed-indicating signals and divides the same by NP/M to generate an average speed signal. The adder-divider 73 outputs the average speed signal into the 8 bit latch 74 which stores such signal until the next average speed signal is generated. The latched signal may then be used in an engine control system as desired.

During the time that the $T_1$ gate 66 has been closed by the high Q output of flip-flop 68 in response to a first pulse 61, the Q output of flip-flop 68 is also applied to AND gate 76 to enable the next successive second signal 55 from the fuel camshaft sensor 56 to close the $T_2$ gate 67. The $T_2$ gate 67 will be opened in response to the same first pulse 61 which opens the $T_1$ gate 66.

During the time the $T_2$ gate is closed, the $T_2$ counter 77 will count clock pulses passing through gate 67 and will thus obtain a count of the number of clock pulses occurring in the time interval beginning with a second signal 55 and ending with the next successive first signal 49.

As may be seen, the gates 66 and 67 and pulse counters 69 and 77 constitute a counting means 78 for counting clock pulses occurring in the time interval $T_1$ beginning and ending with consecutive first signal 49 from the pulse generating means 48 and for counting clock pulses occurring in the time interval $T_2$ beginning with a second signal 55 from pulse generating means 51 and ending with the next successive first signal 49 from pulse generating means 48.

When the engine is first started, the timing means 18 will be at minimum advance, e.g. 14° BTDC, and there will be an initial angular phase relation between the timing and fuel camshafts 16 and 19 to cause fuel delivery to the engine with minimum advance. Likewise, there will be an initial phase relation between the first signals 49 from the disc sensor 50 and the second signals 55 from the fuel camshaft sensor 56, corresponding to minimum advance, with a second signal 56 preceding the next successive first signal 55 by a particular degree of rotation. It is an aspect of the present embodiment that the circular member 52 on the fuel camshaft 19 can be randomly fixed thereto, without regard to whether its holes 53 have any particular orientation with respect to the holes 47 of the disc 45. For example, in one engine, for a given timing advance angle, it might take 10° of engine rotation between a second signal 55 and the next successive first signal 49, whereas in another engine, and with the same timing advance, it might require 20° of engine rotation between a second signal 55 and the next successive first signal 49.

In any given system, however, with the disc 45 fixed to timing shaft 16 and the circular member 52 fixed to the fuel camshaft 19, and with the sensor members 50 and 56 fixed relative to the circular paths of the sensible holes 47 and 53, the angle through which the engine must turn, between a second signal 55 and the next succeeding first signal 49, will be the same for any given degree of timing advance angle.

At engine start up, the engine will initially operate at minimum advance angle. The counts of both counters 69 and 77 are both applied to divider 79, along with a constant $K_T$, the divider 79 functioning to generate an initial, or reference, timing advance angle signal

$$TIM(o) = T_{2(o)}K_T/T_{1(o)},$$

corresponding to minimum advance angle, e.g. 14° BTDC. Dividing one count by the other gives a signal which is proportional to the degree of engine rotation between a second signal 55 and the next succeeding first signal 49 relative to the degree of engine rotation between consecutive first signals 49. Such signal is thus independent of engine speed. The constant $K_T$ scales that divided count to provide a useful binary coded signal, with the constant $K_T$ also representing the angle that the engine turns between successive first signals. Thus, in the particular system shown, if $T_1 = T_2$, then the signal TIM would represent a timing advance of 30°.

The initial timing advance angle signal TIM(o) is then stored for use in the data processor 60 until the engine is shut down.

After the initial timing advance angle signal TIM(o) has been generated, the counts of counters 69 and 77 are applied to divider 80, which functions to generate an instantaneous timing advance signal

$$TIM(t) = T_{2(t)}K_T/T_{1(t)},$$

each time following a new count by counters 69 and 77. In the embodiment of Fig. 4, 30° of engine rotation are required to develop the counts in counters 69 and 77 and a new timing advance signal TIM(t) will be generated in the next 30° of engine rotation. Accordingly, six new timing advance signals TIM(t) will be generated for each full engine revolution.

The initial and instantaneous timing advance signals TIM(o) and TIM(t) are applied to logic circuit 81. If the magnitude of the instantaneous timing advance signal TIM(t) is not less than the magnitude of the initial timing advance signal TIM(o), function block 82 will subtract the initial timing advance signal TIM(o) from the instantaneous timing advance signal TIM(t) and generate a true timing advance signal TIM(t) which is proportional to the actual degree of timing advance produced by the timing means 18. If the instantaneous timing advance signal TIM(t) is less than the initial timing advance signal TIM(o), then function block 83 will add the angle $K_T$ to the instantaneous timing advance signal TIM(t) and then subtract the initial timing advance signal TIM(o) therefrom to generate a positive true timing signal TIM(T) which is proportional to the actual angle of advance from minimum advance.

The successive true timing advance signals TIM(T) are entered into and advanced through the NP/M cell shift register 84. Each time a new TIM(T) signal is entered into shift register 84, the TIM(T) signals in the shift register cells are applied to adder-divider 85 which functions as an angle-averaging means for generating an average timing angle advance signal. Such signal is outputted into the 8-bit latch 86 which stores the signal until the next average timing advance angle signal is generated. The latched signal may be used in an engine control system as desired.

Fig. 6 illustrates a modification of the system of Fig. 4, which may be used in an engine system wherein the timing advance means 18 is physically constrained so that a maximum timing advance of 20° from minimum advance is obtainable. In this case, the TIM(o) and TIM(t) timing advance angle signals are applied to the

$$TIM(o) > 10° \text{ and } TIM(t) > 10°$$

logic circuits 81a and 81b and the function blocks 82 and 83 are actuated in accordance with the logic circuits to generate the desired true timing advance signals TIM(T).

As explained above, when the data processor 60 of Fig. 4 is used with the engine-fuel pump system of Fig. 1, the circular member 52 may be randomly fixed on the fuel camshaft 19, but the average speed and average timing advance signals will be updated only six times for each full engine revolution.

The data processor 60a of Fig. 7, when used with the engine-fuel pump system of Fig. 1 enables the average speed and average timing advance signals to tbe updated twelve times for each full engine revolution (i.e. M=1), utilizing the same first and second rotation responsive means 46 and 51. In this embodiment, however, the circular member 52 must be more accurately located on the fuel camshaft 19 (or the fixed location of the fixed sensors 49 and/or 55 must be more accurately chosen) so that at minimum timing advance a particular second signal 55 is generated slightly before a particular first signal 49 and at maximum timing advance such second signal is generated before the same first signal 49 but after the preceding first signal 49. For example, if the maximum timing advance is 20° from minimum, then the circular member 52 should be oriented on the full camshaft 19 so that, at minimum timing advance angle, a second signal 55 will be generated somewhere between one and nine degrees in advance of a first signal 49.

The data processor 60a of Fig. 7 differs from that of Fig. 4 in that each second signal 55 from the fuel camshaft sensor 56 is used to close the $T_2$ gate 67, with the gate being opened by the next first signal 49 from the sensor 50. Thus, a new count by the $T_2$ counter 77 of the clock pulses from the fixed frequency clock 65 is obtained each time the engine rotates through 30°, or, twelve times during a full engine rotation.

The data processor 60a also differs in that gate 66 is closed by each first signal 49 from the sensor 50 and is opened by the next occurring second signal 55 from the fuel camshaft sensor 56. The clock pulses during this period are then counted by the $T_3$ counter 69a, with the count being proportional to the length of this time period.

After the $T_3$ count has been obtained and during the time that the $T_2$ counter 77 is counting clock pulses, the $T_3$ count is sent to adder 69b, enabling the $T_3$ counter 69a to be reset. After the $T_2$ count has been obtained by counter 77, it too is sent to adder 69b and a $T_1 = T_2 + T_3$ signal is generated during the time the next $T_3$ count is being obtained. As is seen in Fig. 8, regardless of the time relation of the sensor signals 49 and 55, the time periods $T_2 + T_3$ will always equal the time period $T_1$.

Thus, gates 66 and 67, pulse counters 69a and 77 and adder 69b constitute counting means 78 for counting clock pulses occurring in the time interval $T_1$ beginning and ending with consecutive first signals from the pulse generating means 48 and for counting clock pulses occurring in the time interval $T_2$ beginning with a second signal 55 from pulse generating means 51 and ending with the next successive first-signal 49 from pulse generating means 48.

The $T_1$ signal from adder 69b, generated for each 30° of engine revolution, is then sent to divider 71, and an average speed indicating signal is generated by the shift register 72 (having 24 cells) and adder-divider 73 as before. In this case, 24 instantaneous speed indicating signals will be averaged for two full engine revolutions and a new average speed indicating signal will be generated for each successive 30° of engine revolution.

The $T_1$ signal from adder 69b and the $T_2$ signal from counter 77 will also be applied, as before, to dividers 79 and 80 wherein an initial timing advance signal TIM(o) and subsequent instantaneous timing advance signals TIM(t) are generated.

Since the circular member 52 on the fuel camshaft 19 is oriented so that the instantaneous timing advance signal TIM(t) is always greater in magnitude than the initial timing advance signal TIM(o), these signals are then sent directly to function block 82 wherein is generated the instantaneous true timing advance signal

$$TIM(T) = TIM(t) - TIM(o).$$

The TIM(T) signals are sent successively to 24-cell shift register 84 and the 24 signals occurring during two full revolutions of the engine are averaged by adder-divider 85 and latched into the 8-bit latch 86, once for each successive 30° of engine rotation.

The present invention provides a system wherein digital information as to the true speed and timing advance angle of an internal combustion engine can be easily obtained, with the effects of engine torsionals cancelled out, and with such information being constantly updated many times during a single revolution of the engine.

Such system is particularly useful in electronic engine control systems wherein it is necessary to know the true engine speed and timing advance angle in order to regulate the fuel control of the engine for maximum efficiency of operation with minimum exhaust emissions.

## Claims

1. A system having first and second rotatable shafts (16, 19) and timing means (18) rotatably linking one of the shafts (19) to the other (16) and for varying, within a predetermined range, the angular relationship between the shafts (16, 19), comprising:
a first circular member (45) rotating in use about its centre at a speed proportional to the speed of the first shaft (16) and providing a plurality of equiangularly spaced first members (47) movable through a first circular path;
a first signal generating means (48) for generating a first signal (49) in response to movement of each first member (47) past a predetermined point (50) in the first circular path;
a second circular member (52) rotating about its centre at a speed proportional to the speed of the second shaft (19) and providing a plurality of equiangularly spaced second members (53), movable through a second circular path;
a second signal generating means (54) for generating a second signal (55) in response to movement of each second member (53) past a predetermined point (56) in the second circular path;
clock means (65) for generating a series of fixed frequency clock pulses;
counting means (78) for:
a) obtaining a first count of the number of clock pulses occurring in the time interval ($T_1$) beginning and ending with consecutive signals (49) from one (48) of the signal generators (48, 54); and
b) obtaining a second count of the number of clock pulses occurring in the time interval ($T_2$) beginning with a signal (55) from one (54) of the signal generators (48, 54) and ending with a successive signal (49) from the other (48) of the signal generators (48, 54); and
angle-indicating means (79—83) for generating angle-indication signal proportional to the ratio of the first and second counts of the counting means (78) to provide an indication of the relative timing between the shafts; characterised in that:
the number of first and second members (47, 53) is such that N number of each of the first and second signals (49, 55) are generated during one full revolution of one of the first and second shafts (16, 19), N being an integer, the counting means (78) is arranged to obtain N/M number of successive first and second counts during one full revolution, M being an integer, and the angle-indicating means (79—83) generates N/M number of successive angle-indicating signals during one full revolution, and characterised by angle-averaging means (84, 85) for generating an average-angle signal equal to the sum of NP/M number of successive angle-indicating signals divided by the number NP/M, wherein P is an integer representing a predetermined number of successive full revolutions.

2. A system according to claim 1, further including speed-indicating means (71) for generating a speed-indicating signal inversely proportional to the first count of the counting means (78).

3. A system according to claim 1 or claim 2, wherein the first and second members (47, 53) are magnetically sensible, the first signal generating means (48) including a first magnetic sensor adjacent the predetermined point (50) in the first circular path and the second signal generating means (54) including a second magnetic sensor adjacent the predetermined point (56) in the second circular path.

4. A system according to any of claims 1 to 3, wherein the length of time between successive signals (49) of the first signal generating means (48) is equal to the length of time between successive signals (55) of the second signal generating means (54).

5. A system according to any of claims 1 to 4, wherein the counting (78) obtains the first count by obtaining (69a) a third count of the number of clock pulses occurring in the time interval $T_3$), beginning with the first signal (49) and ending with the second signal (55), and by adding (69b) the third count to one of the second counts.

6. A system according to any of claims 1 to 4, wherein the counting means (78) includes first and second pulse counters (69, 77), a first gate (66) connected between the clock means (65) and the first pulse counter (69), and a second gate (67) connected between the clock means (65) and the second pulse counter (77), the first gate (66) being successively closed and opened in response to successive signals (49) from one (48) of the signal generating means (48, 54), and the second gate (67) being closed in response to a signal (55) from the other (54) of the signal generating means (48, 54) and opened in response to a signal (49) from the one (48) signal generating means (48, 54).

7. A system according to claim 5, wherein the counting means (78) includes first and second pulse counters (69a, 77), a first gate (66) connected between the clock means (65) and the first pulse counter (69a), and a second gate (67) connected between the clock means (65) and the second pulse counter (77), the first gate (66) being opened in response to a signal (55) from one (54) of the signal generating means (48, 54), and closed in response to a successive signal from the other signal generating means, the second gate (67) being closed in response to a signal (55) from the other (54) signal generating means (48, 54) and opened in response to a signal (49) from the one (48) signal generating means (48, 54).

8. A system according to claim 4, including: speed-indicating means (71) for generating N/M number of successive speed-indicating signals during the one full revolution, each speed-indicating signal being inversely proportional to the first count of the counting means (78); and speed-averaging means (72, 73) for generating an average-speed signal equal to the sum of NP/M number of successive speed-indicating signals divided by the number NP/M.

A system according to any of claims 1 to 8, wherein
$TIM=(T_2/T_1) \cdot K_T$ in which
TIM=the angle-indicating signal,
$T_1$=the first count of counting means,
$T_2$=the second count of the counting means,
$K_T$=a constant,
and wherein the angle-indicating means (79—83) is arranged to:

(a) generate an initial reference angle-indicating signal TIM(0),

(b) generate a subsequent angle-indicating signal TIM(t),

(c) generate a corrected angle-indicating signal TIM(T), wherein:
$$TIM(T)=TIM(t)-TIM(0),$$
when $TIM(t) \geq TIM(0)$, and
$$TIM(T)=TIM(t)+K_T-TIM(0),$$
when $TIM(t) < TIM(0)$.

10. A system according to any of claims 1 to 9, which includes an engine (10), an engine-driven crankshaft (11), a first gear (14) fixed to the first shaft (16), a second gear (13) fixed to the crankshaft (11) and in mesh with the first gear (14), a fuel pump (21) for delivering fuel to the engine (10), the fuel pump (21) having a drive shaft (19) comprising the second shaft, and the first and second gears (14, 13) having a gear ratio such that the first shaft (16) is rotated through a full revolution for each two full revolutions of the crankshaft (11).

## Patentansprüche

1. Ein System mit ersten und zweiten drehbaren Wellen (16, 19) und Zeitsteuermitteln (18), die eine der Wellen (19) mit der anderen (16) drehbar verbinden und zur Veränderung innerhalb eines vorbestimmten Bereiches, der Winkelbeziehung zwischen den Wellen (16, 19) wobei folgendes vorgesehen ist:

ein erstes Kreisglied (45), welches sich im Gebrauch um seine Mitte mit einer Geschwindigkeit proportional zur Geschwindigkeit der ersten Welle (16) dreht und eine Vielzahl von mit gleichem Winkel beabstandeten ersten Gliedern (47) vorsieht, die durch eine erste Kreisbahn beweglich sind;

erste Signalerzeugungsmittel (48) zur Erzeugung eines ersten Signals (49) in Folge der Bewegung des ersten Gliedes (47) an einem vorbestimmten Punkt (50) in der ersten Kreisbahn vorbei;

ein zweites Kreisfglied (52), welches sich um seine Mitte mit einer Geschwindigkeit proportional zur Geschwindigkeit der zweiten Welle (19) dreht und eine Vielzahl von mit gleichen Winkeln beabstandeten zweiten Gliedern (53) vorsieht, die durch eine zweite Kreisbahn bewegbar sind;

zweite Signalerzeugungsmittel (54) zur Erzeugung eines zweiten Signals (55) in Folge der Bewegung jedes zweiten Gliedes (53) an einem vorbestimmten Punkt (56) in der zweiten Kreisbahn vorbei;

Taktmittel (65) zur Erzeugung einer Reihe von eine feste Frequenz besitzenden Taktimpulsen;

Zählmittel (78) zum:

a) Erhalt eines ersten Zählerstandes der Anzahl von Taktimpulsen, die hinter dem Zeitintervall ($T_1$) auftreten, beginnend und endend mit aufeinander folgenden Signalen (49) von einem (48) der Signalgeneratoren (48, 54);

b) Erhalt eines zweiten Zählerstandes der Anzahl von Taktimpulsen auftretend in dem Zeitintervall ($T_2$) beginnend mit einem Signal (55) von einem (54) der Signalgeneratoren (48, 54) und endend mit einem darauffolgendem Signal (49) vom anderem (48) der Signalgeneratoren (48, 54);

Winkelanzeigemittel (79—83) zur Erzeugung eines Winkelanzeigesignals proportional zum Verhältnis der ersten und zweiten Zählerstände der Zählmittel (78) zum Vorsehen einer Anzeige der relativen Zeitsteuerung zwischen den Wellen;

dadurch gekennzeichnet, daß:

die Anzahl der ersten und zweiten Glieder (47, 53) derart ist, daß die Zahl N von jedem der ersten und zweiten Signale (49, 55) während einer vollen Umdrehung einer der ersten und zweiten Wellen (16, 19) erzeugt wird, wobei N eine ganze Zahl ist und die Zählmittel (78) derart angeordnet sind, daß sie die Zahl N/M aufeinanderfolgender erster und zweiter Zählstände während einer vollen Umdrehung erhalten, wobei M eine ganze Zahl ist und wobei die Winkelanzeigemittel (79—83) die Zahl N/M von aufeinanderfolgenden winkelanzeigenden Signalen während einer vollen Umdrehung erzeugen,

ferner gekennzeichnet durch Winkeldurchschnittsmittel (84, 85) zur Erzeugung eines Durchschnittswinkelsignals gleich der Summe der Zahl NP/N aufeinanderfolgender winkelanzeigender Signale dividiert durch die Anzahl NP/M wobei P eine ganze Zahl ist, die eine vorbestimmte Anzahl von aufeinanderfolgenden vollen Umdrehungen repräsentiert.

2. System nach Anspruch 1, wobei ferner Geschwindigkeitsanzeigemittel (71) vorgesehen sind zur Anzeige eines Geschwindigkeitsanzeigesignals umgekehrtproportional zum ersten Zählerstand der Zählmittel (78).

3. System nach Anspruch 1 oder 2, wobei die ersten und zweiten Glieder (47, 53) magnetisch empfindlich sind, wobei die ersten Signalerzeugungsmittel (48) einen ersten magnetischen Sensor benachbart zum vorbestimmten Punkt (50) in der ersten Kreisbahn aufweisen und die zweiten Signalerzeugungsmittel (54) einen zweiten magnetischen Sensor benachbart zu dem vorbestimmten Punkt (56) in der zweiten Kreisbahn aufweisen.

4. System nach einem der Ansprüchen 1—3, wobei die Länge der Zeit zwischen aufeinanderfolgender Signalen (48) der ersten Signalerzeugungsmittel (48) gleich der Länge der Zeit zwischen aufeinanderfolgenden Signalen (55) der zweiten Signalerzeugungsmittel (54) ist.

5. System nach einem der Ansprüche 1—4, wobei die Zählmittel (78) der ersten Zählerstand erhält durch Erhalt (69a) eines dritten Zählerstandes der Anzahl von Taktimpulsen auftretend in dem Zeitintervall (T₃) beginnend mit dem ersten Signal (49) und endend mit dem zweiten Signal (55), und durch Addition (69b) des dritten Zählerstandes zu einem der zweiten Zählerstande.

6. System nach einem der Ansprüche 1—4, wobei die Zählmittel (78) die ersten und zweiten Pulszähler (69, 77) aufweisen, ein erstes Gatter (66) verbunden zwischen den Taktmitteln (65) und dem ersten Pulszähler (69), und ein zweites Gatter (67) verbunden zwischen den Taktmitteln (65) und dem zweiten Pulszähler (77), wobei das erste Gatter (66) aufeinanderfolgend geschlossen und geöffnet wird in Folge aufeinanderfolgender Signale (49) von einem (48) der Signalerzeugungsmittel (48, 54), wobei das zweite Gatter (67) in Folge eines Signals (55) vom anderen (54) der Signalerzeugungsmittel (48, 54) geschlossen und geöffnet wird in Folge eines Signals (49) von einem (48) Signalerzeugungsmittel (48, 54).

7. System nach Anspruch 5, wobei die Zählmittel (78) die ersten und zweiten Impulszähler (69a, 77) aufweisen, ein erstes Gatter (66) verbunden zwischen den Taktmitteln (65) und dem ersten Impulszähler (69a), und ein zweites Gatter (67) verbunden zwischen den Taktmitteln (65) und dem zweiten Impulszähler (77) wobei das erste Gatter (66) in Folge eines Signals (55) von einem (54) der Signalerzeugungsmittel (48, 54) geöffnet und in Folge eines darauffolgenden Signals von den anderen Signalerzeugungsmitteln geschlossen wird, wobei das zweite Gatter (67) in Folge eines Signals (55) vom anderen (54) Signalerzeugungsmittel (48, 54) geschlossen und geöffnet wird in Folge eines Signals (49) von dem einen (48) Signalerzeugungsmittel (48, 54).

8. System nach Anspruch 4, wobei folgendes vorgesehen ist: Geschwindigkeitsanzeigemittel (71) zur Erzeugung der Zahl N/M aufeinanderfolgender Geschwindigkeitsanzeigesignale während einer vollen Umdrehung, wobei jedes Geschwindigkeitsanzeigesignal umgekehrt proportional zum ersten Zählerstand der Zählmittel (78) ist, und Geschwindigkeitsdurchschnittsmittel (72, 73) zur Erzeugung eines Durchschnittsgeschwindigkeitssignals gleich der Summe der Zahl NP/M von aufeinanderfolgenden Geschwindigkeitsanzeigesignalen dividiert durch die Anzahl NP/M.

9. System nach einem der Ansprüche 1—8, wobei folgendes gilt:

TIM=(T₂/T₁) · K_T mit
TIM=das Winkelanzeigesignal
T₁=der erste Zählerstand der Zählmittel
T₂=der zweite Zählerstand der Zählmittel
K_T=eine Konstante

une wobei die Winkelanzeigemittel (79—83) angeordnet sind um:

(a) ein anfängliches Bezugswinkelanzeigesignal TIM(0) zu erzeugen,

(b) ein darauffolgendes Winkelanzeigesignal TIM(t) zu erzeugen,

(c) ein korrigiertes Winkelanzeigesignal TIM(T) zu erzeugen, wobei folgendes gilt:

TIM(T)=TIM(t)−TIM(0),
wenn TIM(t) TIM(0) und
TIM(T)=TIM(t)+K_t−TIM(0),
wenn TIM(t) TIM(0).

10. System nach einem der Ansprüchen 1—9 mit einem Motor (10), einer motorbetriebenen Kurbelwelle (11), einem ersten Zahnrad (14) befestigt an der ersten Welle (16), einem zweiten Zahnrad (13) befestigt an der Kurbelwelle (11) und in Eingriff mit dem ersten Zahnrad (14), eine Brennstoffpumpe (21) zur Lieferung von Brennstoff an den Motor (10), wobei die Brennstoffpumpe (21) eine Antriebswelle (19) besitzt, die die zweite Welle umfaßt, wobei die ersten und zweiten Zahnräder (14, 13) ein Übersetzungsverhältnis derart besitzen, daß die erste Welle (16) um eine volle Umdrehung für zwei volle Umdrehungen der Kurbelwelle verdreht wird.

## Revendications

1. Système comportant un premier et un second arbres rotatifs (16, 19) et des moyens de synchronisation (18) reliant à rotation l'un (19) des arbres à l'autre (16) et servant à modifier, dans une plage prédéterminée, la relation angulaire entre les arbres (16, 19), comprenant:

—un premier élément circulaire (45) tournant en cours d'utilisation, autour de son contre à une vitesse proportionnelle à la vitesse du premier arbre (16) définissant une pluralité de premiers éléments (47) équidistants angulairement, déplaçables sur une première trajectoire circulaire:

—des moyens (48) de génération d'un premier signal pour produire un premier signal (49) en réponse au passage de chaque premier élément (47) devant un point prédéterminé (50) de la première trajectoire circulaire;

—un second élément circulaire (52) tournant autour de son centre à une vitesse proportionnelle à la vitesse du second arbre (19) et définissant une pluralité de seconds éléments (53) équidistants angulairement déplaçables sur une seconde trajectoire circulaire;

— des moyens (54) de génération d'un second signal pour produire un second signal (55) en réponse au passage de chaque second élément (53) devant un point prédéterminé (56) de la second trajectoire circulaire;

— des moyens formant horloge (65) pour produire une série d'impulsions d'horloge à fréquence fixe;

— des moyens de comptage (78) pour:

a) obtenir un premier compte du nombre des impulsions d'horloge apparaissant dans l'intervalle de temps $(T_1)$ commençant et se terminant par des signaux consécutifs (49) délivrés par l'un (48) des générateurs de signaux (48, 54); et

b) obtenir un second compte du nombre d'impulsions d'horloge apparaissant dans l'intervalle de temps $(T_2)$ commençant par un signal (55) délivré par l'un (54) des générateurs de signaux (48, 54) et se terminant par un signal consécutif (49) délivré par l'autre (48) des générateurs de signaux (48, 54); et

— des moyens indicateurs d'angle (79—83) pour produire un signal indicateur d'angle proportionnel au rapport des premier et second comptes des moyens de comptage (78) afin de fournir une indication de calage relatif des arbres; caractérisé en ce que:

— le nombre des premiers et seconds éléments (47, 53) est tel que le nombre N de chacun des premier et second signaux (49, 55) est produit pendant une rotation complète de l'un des premier et second arbres (16, 19), N étant un entier, les moyens de comptage (78) étant agencés pour fournir un nombre N/M de premiers et seconds comptes successifs pendant une rotation complète, M étant un entier, et les moyens indicateurs d'un angle (79, 83) produisant un nombre N/M de signaux indicateurs d'angle successifs, pendant une rotation complète, et caractérisé par des moyens (84, 85) établissant un angle moyen pour produire un signal d'angle moyen égal à la somme du nombre NP/M de signaux indicateurs d'angle successifs, divisée par le nombre NP/M, P étant un entier représentant un nombre prédéterminé de rotations complètes successives.

2. Système selon la revendication 1, comprenant en outre des moyens indicateurs de vitesse (71) pour produire un signal indicateur de vitesse inversement proportionnel au premier compte des moyens de comptage (78).

3. Système selon la revendication 1 ou la revendication 2, dans lequel les premiers et seconds éléments (47, 53) sont sensibles du point de vue magnétique, les moyens (48) de génération du premier signal incluant un premier capteur magnétique voisin du point prédéterminé (50) situé sur la première trajectoire circulaire et les moyens (54) de génération du second signal incluant un second capteur magnétique voisin du point prédéterminé (56) situé sur la seconde trajectoire circulaire.

4. Système selon l'une quelconque des revendications 1 à 3, dans lequel l'intervalle de temps entre des signaux successifs (49) produits par les moyens (48) de génération des premiers signaux est égal à l'intervalle de temps entre des signaux successifs (55) délivrés par les moyens (54) de génération des seconds signaux.

5. Système selon l'une quelconque des revendications 1 à 4, dans lequel les moyens de comptage (78) fournissent le premier compte en fournissant (69a) un troisième compte du nombre des impulsions d'horloge apparaissant dans l'intervalle de temps $(T_3)$, qui commence par le premier signal (49) et se termine avec le second signal (55) et en ajoutant (69b) le troisième compte à l'un des seconds comptes.

6. Système selon l'une quelconque des revendications 1 à 4, dans lequel les moyens de comptage (78) incluent des premier et second compteurs d'impulsions (69, 77), une première porte (66) connectée entre les moyens formant horloge (65) et le premier compteur d'impulsions (69), et une seconde porte (67) connectée entre les moyens formant horloge (65) et le second compteur d'impulsions (77), la première porte (66) étant successivement fermée et ouverte en réponse à des signaux successifs (48) délivrés par l'un (48) des moyens (48, 54) de génération de signaux, et la seconde porte (67) étant fermée en réponse à un signal (55) délivré par l'autre (54) des moyens (48, 54) de génération de signaux et ouverte en réponse à un signal (49) délivré par le premier (48) des moyens (48, 54) de génération de signaux.

7. Système selon la revendication 5, dans lequel les moyens de comptage (78) comprennent des premier et second compteurs d'impulsions (69a, 77), une première porte (66) connectée entre les moyens formant horloge (65) et le premier compteur d'impulsions (69a), et une seconde porte (67) connectée entre les moyens formant horloge (65) et le second compteur d'impulsions (77), la première porte (66) étant ouverte en réponse à une signal (55) délivré par l'un (54) des moyens (48, 54) de génération de signaux et fermée en réponse à un signal successif délivré par l'autre des moyens de génération de signaux, la seconde porte (67) étant fermée en réponse à un signal (55) délivré par l'autre (54) des moyens (48, 54) de génération de signaux et ouverte en réponse à un signal (49) délivré par le premier (48) des moyens (48, 54) de génération d signaux.

8. Système selon la revendication 4, incluant: des moyens indicateurs de vitesse (71) pour produire un nombre N/M de signaux indicateurs de vitesse successifs pendant une rotation complète, chaque signal indicateur de vitesse étant inversement proportionnel au premier compte des moyens de comptage (78); et des moyens (72, 73) établissant une vitesse moyenne pour produire un signal de vitesse moyenne égal à la somme du nombre NP/M de signaux indicateurs de vitesse successifs divisée par le nombre NP/M.

9. Système selon l'une quelconque des revendications 1 à 8, dans lequel

$TIM=(T_2/T_1) \cdot K_T$, avec

$TIM$=signal indicateur d'angle

$T_1$=premier compte des moyens de comptage,

$T_2$=second compte des moyens de comptage

$K_T$=constante,

et dans lequel les moyens indicateurs d'angle (79—83) sont agencés de manière à:

(a) produire un signal indicateur d'angle initial de référence TIM(0),

(b) produire un signal indicateur d'angle subséquent TIM(t),

(c) produire un signal indicateur d'angle corrigé TIM(T) avec:

$$TIM(T)=TIM(t)-TIM(0)$$

lorsque $TIM(t) \geq TIM(0)$; et

$$TIM(T)=TIM(t)+K_T-TIM(0)$$

lorsque $(t)<TIM(0)$.

10. Système selon l'une quelconque des revendications 1 à 9, qui comprend un moteur (10) un vilebrequin (11) entraîné par le moteur, un premier pignon (14) fixé au premier arbre (16), un second pignon (13) fixé au vilebrequin (11) et engrenant avec le premier pignon (14), une pompe à carburant (21) pour envoyer du carburant au moteur (10), la pompe à carburant (21) ayant un arbre d'entraînement (19) comportant le second arbre, et les premier et second pignons (14, 13) possédant un rapport d'engrenage tel que le premier arbre (16) effectue une rotation complète lorsque le vilebrequin (11) effectue deux rotations complètes.

FIG.1

FIG.5

FIG.8

FIG. 2

1/2 ORDER TORSIONAL
FIRST ORDER TORSIONAL
SECOND ORDER TORSIONAL

ENGINE SPEED (RPM)

ENGINE REVOLUTIONS            TIME →

FIG. 3

INSTANTANEOUS SPEED
AVERAGE SPEED

ENGINE SPEED (RPM)

SAMPLING PERIODS

ENGINE REVOLUTIONS            TIME →

# FIG.4

SENSOR 50

FUEL CAMSHAFT SENSOR 56

68

F/F Q / Q̄

76

78

60

79

$$TIM(O) = \frac{T_2(O)}{T_1(O)} K_T$$

ON OFF T₂ GATE

67

T₂ COUNTER

77

FIXED FREQ. CLOCK

65

T₁ GATE ON OFF

66

T₁ COUNTER

69

$K_T$

80

$$TIM(t) = \frac{T_2(t)}{T_1(t)} K_T$$

$K_R$

71

81

NO    $TIM(t) < TIM(O)$

82

YES    83

$$SPD(t) = \frac{K_R}{T_1(t)}$$

$TIM(T) = TIM(t) - TIM(O)$

$TIM(T) = K_T + TIM(t) - TIM(O)$

NP/M CELL SHIFT REG    72

84

NP/M CELL SHIFT REG.

73

SUM AND ÷ BY NP/M    85

SUM AND ÷ BY NP/M

74

8 BIT — ENGINE SPEED    86

8 BIT TIMING ADV. ANGLE

**FIG.6**

80 — TIM(t)        TIM(0) — 79

81a

TIM(0)>10° — YES

NO

82 — TIM(t) = TIM(t) − TIM(0)

YES   81b

TIM(t)>10°

NO

83 — TIM(T) = $K_T$ + TIM(t) + TIM(0)

**FIG.7**

60a  78

77

79

50

SENSOR

$T_2$ COUNTER

$TIM(0) = \dfrac{T_2(0)}{T_1(0)} K_T$

ON OFF GATE

69b

65

CLOCK

66   67   69a

$T_1 = T_2 + T_3$

$K_T$

GATE ON OFF

$T_3$ COUNTER

80

$TIM(t) = \dfrac{T_2(t)}{T_1(t)} K_T$

FUEL CAMSHAFT SENSOR

56

71

$K_R$   $SPD(t) \dfrac{K_R}{T_1}$

82

TIM(T) = TIM(t) − TIM(0)

72

NP/M CELL SHIFT REG.

84

NP/M CELL SHIFT REG.

85

73 — SUM AND ÷ BY NP/M

SUM AND ÷ BY NP/M

86

74 — 8 BIT - ENGINE SPEED

8 BIT TIMING ADV. ANGLE